# EUROPÄISCHE PATENTANMELDUNG

(11) **EP 1 449 474 A1**
(43) Veröffentlichungstag der Anmeldung: **25.08.2004**
(21) Anmeldenummer: 04002630.4
(22) Anmeldetag: 06.02.2004
(51) Int. Cl.: A47L 9/04

(54) **In einer Teppichkehrmaschine angeordnete Bürstenwalze sowie Kupplung eines Antriebsteils mit einem Abtriebsteil**

(30) Priorität: 22.02.2003 DE 10307609; 31.01.2004 DE 102004004977
(71) Anmelder: Vorwerk & Co. Interholding GmbH, 42275 Wuppertal (DE)
(72) Erfinder: Meyer, Frank, 58675 Hemer (DE)
(74) Vertreter: Müller, Enno, Dipl.-Ing.

(57) **Zusammenfassung**

Die Erfindung betrifft zunächst eine in einer Teppichkehrmaschine (1) angeordnete Bürstenwalze (14), die als Abtriebsteil (19) über ein Antriebsteil (18) bevorzugt über eine Antriebswelle (8) angetrieben ist. Um eine störgeräuschund spielfreie Mitnahme der Bürstenwalze bei Einhaltung eines kleinen Bauraums zu erreichen, schlägt die Erfindung vor, dass die Antriebswelle (8) sich bezüglich einer Drehachse der Antriebswelle (8) radial und/oder axial erstrekkende borstenartige Fortsätze (17) aufweist, die mit auf einer zugeordneten Fläche der Bürstenwalze (14) angeordneten borstenartigen Fortsätzen (17) in Kupplungseingriff sind.

In allgemeinerer Art betrifft die Erfindung auch eine Kupplung (K) eines Antriebsteils (18) mit einem Abtriebsteil (19), wobei Teile des Antriebsteils (18) in Teile des Abtriebsteils (19) eingreifen. Um bei einfachem und somit kostengünstigem Aufbau eine bauraumoptimierte und störgeräuschfreie Lösung zu erreichen, schlägt die Erfindung vor, dass die Teile an dem Antriebsteil (18) und/oder an dem Abtriebsteil (19) als borstenartige Fortsätze (17) ausgebildet sind.

## Beschreibung

Die Erfindung betrifft zunächst eine in einer Teppichkehrmaschine angeordnete Bürstenwalze, die als Abtriebsteil über ein Antriebsteil, bevorzugt über eine Antriebswelle angetrieben ist.

Teppichkehrmaschinen der in Rede stehenden Art sind bekannt, wobei auch motorangetriebene Bürstengeräte, insbesondere als Vorsatzgeräte für Staubsauger, im Sinne der Erfindung als Teppichkehrmaschinen bezeichnet werden. So wird bspw. auf die DE 196 21301 A1 verwiesen. Aus dieser Patentanmeldung ist es bekannt, eine Bürstenwalze über eine Antriebswelle der Maschine anzutreiben, wozu auf der Antriebswelle Mitnehmer angeordnet sind, über welche kraftschlüssig die Bürstenwalze mitgeschleppt wird, dies unter Erzielung einer Keilwirkung.

Im Hinblick auf den zuvor beschriebenen Stand der Technik wird eine technische Problematik der Erfindung darin gesehen, eine Teppichkehrmaschine derart verbessert auszugestalten, dass eine störgeräusch- und spielfreie Mitnahme der Bürstenwalze bei Einhaltung eines kleinen Bauraums erreicht ist.

Diese Problematik ist zunächst und im Wesentlichen dadurch gelöst, dass die Antriebswelle sich bezüglich einer Drehachse der Antriebswelle radial und/oder axial erstreckende, borstenartige Fortsätze aufweist, die mit auf einer zugeordneten Fläche der Bürstenwalze angeordneten borstenartigen Fortsätzen in Kupplungseingriff sind. Zufolge dieser erfindungsgemäßen Ausgestaltung ist in einfachster Weise eine drehfeste Kupplung zwischen Antriebswelle und Bürstenwalze erreicht, welche kostengünstig herstellbar und baulich auf geringstem Raum ausbildbar ist. Auch ist durch die erwähnte Ausgestaltung das Geräuschniveau erheblich verbessert. Die borstenartigen Fortsätze der Bürstenwalze und der Antriebswelle bzw. des Abtriebsteils und des Antriebsteils verkrallen ineinander, so dass eine kraft- und gegebenenfalls auch eine formschlüssige, drehfeste Verbindung erreicht ist. In einer vorteilhaften Weiterbildung des Erfindungsgegenstandes ist vorgesehen, dass sich der Borsteneingriff über ein Drittel oder mehr einer axialen Länge einer Bürstenwalze erstreckt, womit auch hohe, im Zuge einer Boden-, insbesondere Teppichbodenbearbeitung mittels der Teppichkehrmaschine auftretende Drehmomente störungsfrei übertragen werden können. Als besonders vorteilhaft erweist sich eine Ausgestaltung, bei welcher die Fortsätze auf dem Antriebsteil in und/oder auf dem Abtriebsteil entgegen Antriebsrichtung bzw. Umfangsrichtung geneigt ausgerichtet sind. Zufolge dieser Ausgestaltung ist eine Mitnahmerichtung vorgegeben. Die borstenartigen Fortsätze schließen, bezogen auf ihre Längserstrekkung, einen spitzen Winkel zu der Oberfläche, auf welchen die Fortsätze angeordnet sind, ein. Demnach können die borstenartigen Fortsätze je nach Drehrichtung des Antriebsteils kraft- und formschlüssig ineinandergreifen oder gegeneinander abgleiten. Auch eine senkrecht zur Befestigungsfläche ausgerichtete Anordnung der borstenartigen Fortsätze ist denkbar. Bei dieser Ausgestaltung ist eine Mitnahme des anderen Teils in beiden Richtungen erreicht. Darüber hinaus besteht die Möglichkeit einer spiralförmigen Anordnung der borstenförmigen Fortsätze entlang einer Antriebs- und/oder Abtriebsteil-Längsachse. Die korrespondierenden Flächen von Antriebsteil und Abtriebsteil können ganzflächig mit den borstenartigen Fortsätzen versehen sein. Diesbezüglich kann in einer Weiterbildung vorgesehen sein, dass borstenfreie Abschnitte zwischen beborsteten Zonen vorgesehen sind. Die bevorzugte geneigte Ausrichtung der Fortsätze erweist sich bspw. bei Teppichkehrmaschinen mit Bürstenwalzen von Vorteil, da hierdurch in der einen Drehrichtung der Antriebswelle eine kraft- und gegebenenfalls auch formschlüssige Drehmitnahme der Bürstenwalze erfolgt. Zum Entfernen der Bürstenwalze wird diese in zur normalen Bearbeitungsrichtung entgegengesetzter Richtung gedreht und gleichzeitig von der Antriebswelle gezogen, wobei die borstenartigen Fortsätze von Antriebsteil und Abtriebsteil gegeneinander abgleiten. Die borstenartigen Fortsätze können als textile Fasern ausgebildet sein, darüber hinaus als Kunststofffasern. Die Borsten können als Borstenbüschel zylindrisch geformt zusammengefasst sein. Auch ein Knäuel von Fasern ist diesbezüglich denkbar. Als Materialien können bspw. Chinacort oder Filze zur Anwendung kommen. Weiter ist auch ein Gewebe oder eine gewebeähnliche Schicht (bspw. Velours oder Schlinge) denkbar. Die borstenartigen Fortsätze sind bevorzugt im Beflokkungsverfahren aufgebracht. Auch das Aufbringen mit Sprühkleber erweist sich als vorteilhaft. Darüber hinaus ist auch eine getuftete Oberfläche denkbar. Ansonsten sind Trägermaterialien für die Borsten oder Fasern verschiedener Art denkbar. Es kann der Grundkörper selbst sein mit einer klassischen Beborstung mittels Stanzanker oder Schweißen u.s.w.. Es können jedoch auch Zwischenlagen aus flexiblem Material eingebracht werden, etwa so, wie aus dem Aufbau von Chinacort oder Teppichen bekannt. Die Borstenlängen sind zwischen 0,1 und mehreren Millimetern, so bspw. 5 mm, gewählt. Schließlich kann vorgesehen sein, dass die mit beborsteten Fortsätzen versehenen, zugeordneten Flächen angepasst konisch verlaufen.

Die Erfindung betrifft desweiteren eine Kupplung eines Antriebsteils mit einem Abtriebsteil, wobei Teile des Antriebsteils in Teile des Abtriebsteils eingreifen. Kupplungen der in Rede stehenden Art sind in den verschiedensten Ausführungsformen bekannt, welche zumeist kraft-, aber auch teilweise reibschlüssig arbeiten. So sind insbesondere Kupplungen bekannt, bei welchen Zähne des Antriebsteils in entsprechend ausgeformte Zahnzwischenräume des Abtriebsteils eingreifen und somit eine kuppelnde Wirkung erzielen. Um im Hinblick auf den bekannten Stand der Technik eine Kupplung der in Rede stehenden Art anzugeben, welche bei einfachem und somit kostengünstigem Aufbau eine bauraumoptimierte und störgeräuschfreie Lösung erlaubt, wird vorgeschlagen, dass die Teile an dem Antriebsteil und/oder an dem Abtriebsteil als borstenartige Fortsätze ausgebildet sind. Zufolge dieser erfindungsgemäßen Ausgestaltung ist im Vergleich zu den üblichen, bekannten Kupplungslösungen, bspw. Zahn-Kupplungen, eine Vielzahl von gleichzeitig wirkenden Kupplungseingriffen erreicht. Die Übertragung von dem Antriebsteil auf das Abtriebsteil erfolgt demzufolge nicht nur über eine oder zwei gleichzeitig in Wirkung stehende, relativ große Flächen. Vielmehr ist die Beaufschlagungsfläche zur Mitnahme des Abtriebsteils auf eine Vielzahl von borstenartigen Fortsätzen verteilt. Diese Ausgestaltung führt zu einer Geräuschreduzierung. Weiter ist diese erfindungsgemäße Kupplungsausformung auf relativ kleinem Bauraum realisierbar. Die borstenartigen Fortsätze können in Form eines Gewebes oder einer gewebeähnlichen Schicht auf dem Antriebsteil bzw. Abtriebsteil aufgebracht sein. So können bspw. aus einem Kunststoffmaterial hergestellte Antriebs- und/oder Abtriebsteile auch mit einer getufteten Oberfläche versehen sein. Auch ist eine Aufbringung von borstenartigen Fortsätzen als Beflockung denkbar. In einer Weiterbildung des Erfindungsgegenstandes ist vorgesehen, dass das Antriebsteil und/oder das Abtriebsteil metallisch ausgebildet ist und einteilig angeformte Fortsätze aufweist, die hinsichtlich ihrer Dimensionierung an bspw. im Beflockungsverfahren befestigte Fortsätze des Abtriebsteils und/ oder des Antriebsteils zum drehmomentübertragenden Formschlusseingriff angepasst ausgebildet sind. Zufolge dieser Ausgestaltung können die an dem metallisch ausgebildeten Antriebs- und/oder Abtriebsteil angeformten Fortsätze gleichfalls metallisch sein. Deren Dimensionierung entspricht bevorzugt der von borstenartigen Fortsätzen aus textilen Fasern oder Kunststofffasern, weisen demnach eine Stärke von weniger 1 mm und eine Höhe bis zu 2 oder 4 mm auf. In einer beispielhaften Ausgestaltung kann vorgesehen sein, dass das Antriebsteil ein Treibriemen ist und das Abtriebsteil ein walzenartiger Körper, der die borstenartigen Fortsätze auf seiner dem Treibriemen zugeordneten Außenumfangsfläche aufweist. Eine solche Treibriemen-Anordnung ist gegenüber den bekannten Ausgestaltungen geräuschärmer. Darüber hinaus wird die übliche kraftschlüssige Treibriemen-Kupplung ergänzt durch Formschlusseingriff der borstenartigen Fortsätze von Antriebs- und Abtriebsteil ineinander. Zufolge dessen ist eine derartige erfindungsgemäße Treibriemen-Anordnung auch bei höheren Drehmomenten, bei welchen die üblichen bekannten Treibriemen durchrutschen würden, weiterhin wirksam. Auch wird vorgeschlagen, dass das Antriebsteil ritzelartig ausgebildet und mit einer Seitenfläche eines Scheibenkörpers, bspw. einer Bohnerscheibe, zusammenwirkt. So ist das Antriebsteil bspw. in Form eines üblichen Reibrades ausgebildet mit auf der Umfangsfläche angeordneten borstenartigen Fortsätzen, welche mit borstenartigen Fortsätzen der Seitenfläche des Scheibenkörpers in Eingriff stehen, womit eine formschlüssige Kraftübertragung erreicht werden kann. Weiter alternativ kann auch vorgesehen sein, dass das Antriebsteil und das Abtriebsteil Scheibenkörper sind, die an Umfangsseitenflächen miteinander in Eingriff sind. Als besonders vorteilhaft erweist sich eine Ausgestaltung, bei welcher die Fortsätze auf dem Antriebsteil in und/oder auf dem Abtriebsteil entgegen Antriebsrichtung bzw. Umfangsrichtung geneigt ausgerichtet sind. Zufolge dieser Ausgestaltung ist eine Mitnahmerichtung vorgegeben. Die borstenartigen Fortsätze schließen, bezogen auf ihre Längserstreckung, einen spitzen Winkel zu der Oberfläche, auf welchen die Fortsätze angeordnet sind, ein. Demnach können die borstenartigen Fortsätze je nach Drehrichtung des Antriebsteils kraft- und formschlüssig ineinandergreifen oder gegeneinander abgleiten. Auch eine senkrecht zur Befestigungsfläche ausgerichtete Anordnung der borstenartigen Fortsätze ist denkbar. Bei dieser Ausgestaltung ist eine Mitnahme des anderen Teils in beiden Richtungen erreicht. Darüber hinaus besteht die Möglichkeit einer spiralförmigen Anordnung der borstenförmigen Fortsätze entlang einer Antriebs- und/oder Abtriebsteil-Längsachse. Die korrespondierenden Flächen von Antriebsteil und Abtriebsteil können ganzflächig mit den borstenartigen Fortsätzen versehen sein. Diesbezüglich kann in einer Weiterbildung vorgesehen sein, dass borstenfreie Abschnitte zwischen beborsteten Zonen vorgesehen sind. Die bevorzugte geneigte Ausrichtung der Fortsätze erweist sich bspw. bei Teppichkehrmaschinen mit Bürstenwalzen von Vorteil, da hierdurch in der einen Drehrichtung der Antriebswelle eine kraftund gegebenenfalls auch formschlüssige Drehmitnahme der Bürstenwalze erfolgt. Zum Entfernen der Bürstenwalze wird diese in zur normalen Bearbeitungsrichtung entgegengesetzter Richtung gedreht und gleichzeitig von der Antriebswelle gezogen, wobei die borstenartigen Fortsätze von Antriebsteil und Abtriebsteil gegeneinander abgleiten. Die borstenartigen Fortsätze können als textile Fasern ausgebildet sein, darüber hinaus als Kunststofffasern. Die Borsten können als Borstenbüschel zylindrisch geformt zusammengefasst sein. Auch ein Knäuel von Fasern ist diesbezüglich denkbar. Als Materialien können bspw. Chinacort oder Filze zur Anwendung kommen. Weiter ist auch ein Gewebe oder eine gewebeähnliche Schicht (bspw. Velours oder Schlinge) denkbar. Die borstenartigen Fortsätze sind bevorzugt im Beflockungsverfahren aufgebracht. Auch das Aufbringen mit Sprühkleber erweist sich als vorteilhaft. Darüber hinaus ist auch eine getuftete Oberfläche denkbar. Ansonsten sind Trägermaterialien für die Borsten oder Fasern verschiedener Art denkbar. Es kann der Grundkörper selbst sein mit einer klassischen Beborstung mittels Stanzanker oder Schweißen u.s.w.. Es können jedoch auch Zwischenlagen aus flexiblem Material angebracht werden, etwa so, wie aus dem Aufbau von Chinacort oder Teppichen bekannt. Die Borstenlängen sind zwischen 0,1 und mehreren Millimetern, so bspw. 5 mm, gewählt. Schließlich kann vorgesehen sein, dass die mit beborsteten Fortsätzen versehenen, zugeordneten Flächen angepasst konisch verlaufen.

Nachstehend ist die Erfindung anhand der beigefügten Zeichnungen, welche lediglich mehrere Ausführungsbeispiele darstellen, näher erläutert. Es zeigt:
- Fig. 1: eine erfindungsgemäße Teppichkehrmaschine in Unteransicht;
- Fig. 2: eine perspektivische Einzeldarstellung einer Bürstenwalze der Teppichkehrmaschine mit der diese antreibenden Antriebswelle;

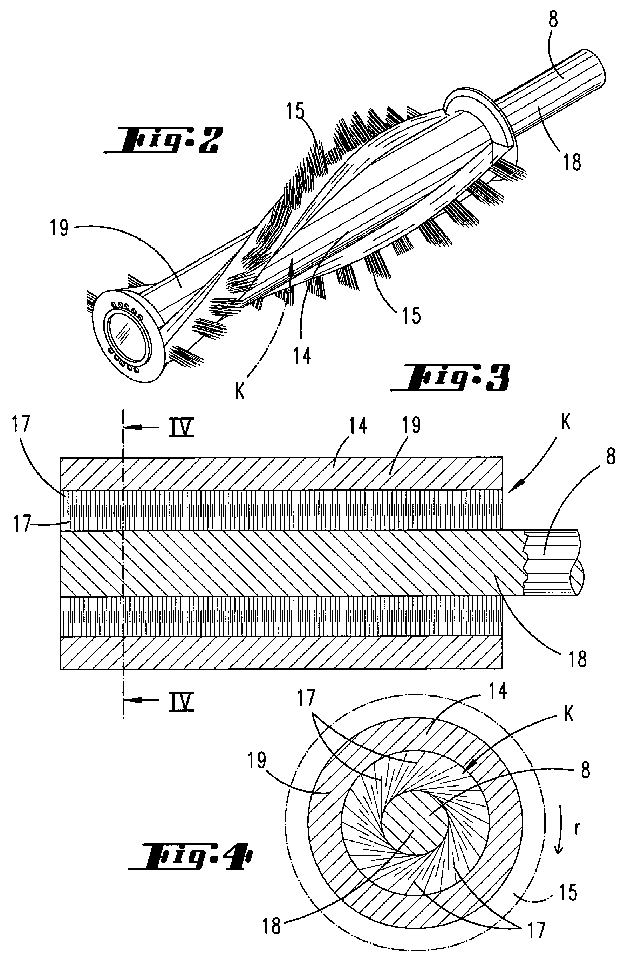

- Fig. 3: einen schematischen Längsschnitt durch die Kupplungsanordnung von Bürstenwalze und Antriebswelle;
- Fig. 4: den schematischen Querschnitt gemäß der Linie IV-IV in Fig. 3;

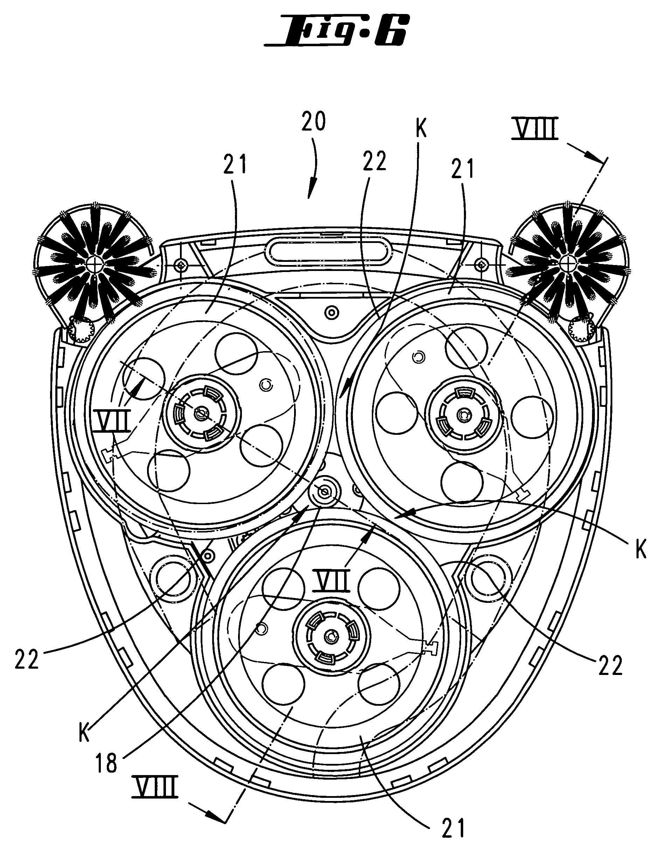

- Fig. 5: einen schematischen Schnitt gemäß der Linie V-V in Fig. 1 durch eine Kupplungsanordnung zwischen einem Treibriemen und der durch diesen angetriebenen Antriebswelle;
- Fig. 6: eine Unteransicht gegen ein, erfindungsgemäße Kupplungen aufweisendes Bohnergerät;

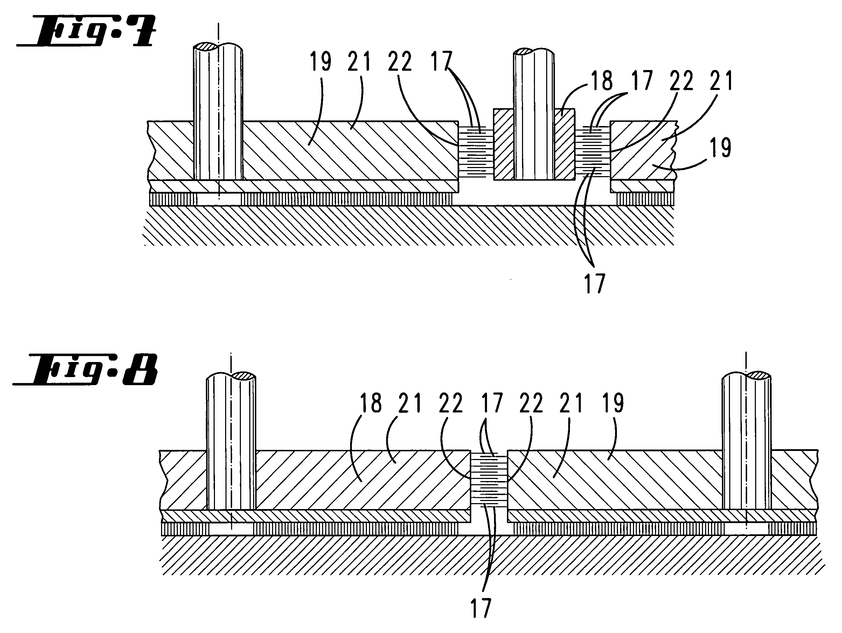

- Fig. 7: den schematischen Schnitt gemäß der Linie VII-VII in Fig. 6, die Kupplungsanordnung zwischen einem ritzelartigen Antriebsteil und einer Bohnerscheibe darstellend;
- Fig. 8: den schematischen Schnitt gemäß der Linie VIII-VIII in Fig. 6, die Kupplungsanordnung zwischen zwei Bohnerscheiben betreffend.

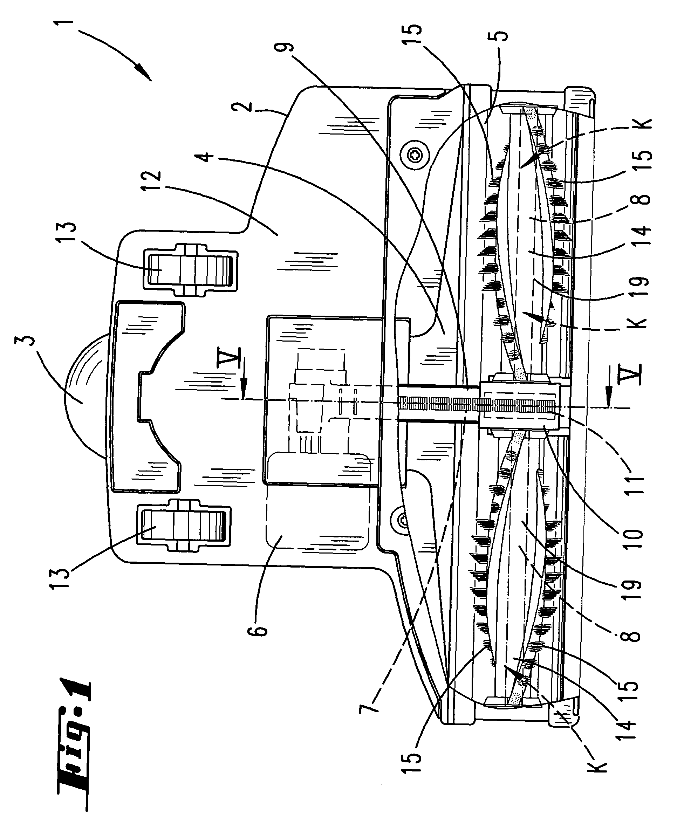

Dargestellt und beschrieben ist zunächst mit Bezug zu Fig. 1 eine Teppichkehrmaschine 1 in Form eines motorangetriebenen Bürstengeräts, welches in dem gezeigten Ausführungsbeispiel als Vorsatzgerät für einen Staubsauger ausgebildet ist. Die Maschine 1 setzt sich im Wesentlichen aus einem Gehäuse 2 und einem Anschlussstutzen 3 zusammen. In dem Gehäuse 2 erstreckt sich ein Saugkanal 4, von dem Rohranschlussstutzen 3 ausgehend bis in einen Saugraum 5. Letzterer befindet sich in einem stirnseitigen Bereich, welcher dem Rohranschlussstutzen 3 abgewandt ist und erstreckt sich nahezu über die gesamte Gehäusebreite.

Desweiteren ist in dem Gehäuse 2 ein separater Antrieb 6 angeordnet, welcher über einen Treibriemen 7 eine sich in den Saugraum 5 erstreckende Antriebswelle 8 in Rotation versetzt. Der Treibriemen 7 liegt in einem Riemengehäuse 9 ein, welches an dem der Antriebswelle 8 abgewandten Ende schwenkbeweglich gelagert ist. Die Schwenkachse bildet zugleich die Kraftübertragungsachse von dem separaten Antrieb 6 auf den Treibriemen 7 und liegt parallel zur Antriebswelle 8.

Der Riemenantrieb bzw. das Riemengehäuse 9 erstreckt sich etwa von der Mitte des Saugraumes 5 ausgehend senkrecht zur Antriebswelle 8. An dem der Antriebswelle 8 zugeordneten Ende greift der Treibriemen 7, jedenfalls innerhalb eines Getriebegehäuses 10, auf eine Antriebsscheibe 11, von der beidseitig die zweigeteilte Antriebswelle 8 ausgeht. Letztere erstreckt sich somit jeweils von der Antriebsscheibe 11 ausgehend bis in einen seitlichen Endbereich des Saugraumes 5.

In Fig. 1 ist die Teppichkehrmaschine 1 in einer Unteransicht gezeigt, wobei im Bereich des Saugraumes 5 der Boden 12 partiell aufgebrochen ist. Es ist zu erkennen, dass auf der dem Saugraum 5 abgewandten Seite, d. h. auf Höhe des Rohranschlussstutzens 3, zwei Laufrollen 13 bodenseitig angeordnet sind.

Die über die Antriebswellen 8 antreibbaren Bürstenwalzen 14 sind als Hohlkörper ausgebildet und außenseitig mit zwei um 180° versetzt angeordneten Borstenreihen 15 versehen, welche sich von einem Endbereich der Borstenwalze 14 ausgehend um ca. 180° spiralförmig um diese erstrecken.

Die Bürstenwalzen 14 sind auf die Antriebswellen 8 gesteckt und erstrecken sich in eingebautem Zustand etwa von dem Getriebegehäuse 10 ausgehend bis in den Endbereich des Saugraumes 5.

Zur Kraftübertragung von Antriebswelle 8 auf die zugeordnete Bürstenwalze 14 ist eine Kupplung K vorgesehen. Diese setzt sich aus sowohl umfangsseitig an der Antriebswelle 8 als auch auf der dieser zugeordneten Innenfläche der Bürstenwalze 14 angeordneten borstenartigen Fortsätzen 17 zusammen, welche in Kupplungseingriff sind. Bei diesen borstenartigen Fortsätzen 17 kann es sich um ein aufgebrachtes Gewebe oder eine gewebeähnliche Schicht handeln. Schematisch dargestellt ist eine Ausgestaltung, bei welcher die borstenartigen Fortsätze 17 aus textilen Fasern oder Kunststofffasern bestehen, welche bspw. im Beflockungsverfahren aufgebracht sein können.

Die borstenartigen Fortsätze 17 sind in den Schnittdarstellungen zum besseren Verständnis übertrieben dargestellt.

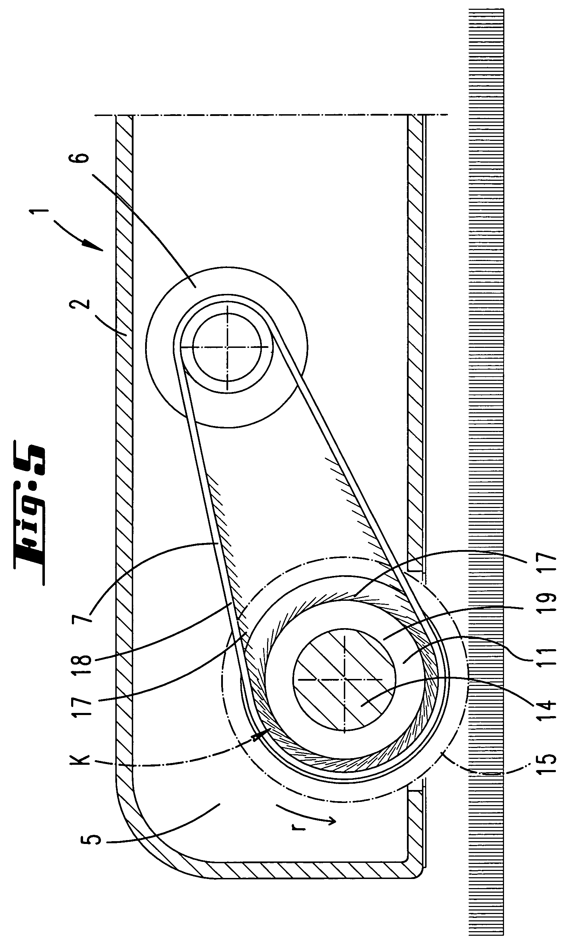

Wie aus der Querschnittsdarstellung in Fig. 4 zu erkennen, sind die borstenartigen Fortsätze 17 auf der, ein Antriebsteil 18 ausbildenden Antriebswelle 8 in Antriebsrichtung r geneigt ausgerichtet. So schließen die Fortsätze 17 zur Oberfläche der Antriebswelle 8 einen spitzen Winkel ein.

Die borstenartigen Fortsätze 17 der ein Abtriebsteil 19 ausbildenden Bürstenwalze 14 sind entgegen der Antriebsrichtung r geneigt ausgerichtet, so dass durch diese Anordnungen eine Drehmitnahme der Bürstenwalze 14 über die borstenartigen Fortsätze 17 in Antriebsrichtung r erfolgen kann. Entgegen der Antriebsrichtung r gleiten die borstenartigen Fortsätze 17 gegeneinander ab, so dass die Drehkupplung aufgehoben ist.

Zum Entfernen einer bspw. abgenutzten Bürstenwalze 14 wird diese von Hand entgegen der üblichen Antriebsrichtung r auf der Antriebswelle 8 gedreht unter gleichzeitigem Abziehen von der Antriebswelle 8.

Auch die Kupplung K zwischen Treibriemen 7 und Antriebsscheibe 11 ist durch borstenartige Fortsätze 17 gebildet. Hierzu sind letztere riemeninnenseitig angeordnet und zur Riemenoberfläche geneigt ausgerichtet. Diese Fortsätze 17 greifen mit umfangsseitig der Antriebsscheibe 11 angeordneten weiteren borstenartigen Fortsätzen 17 ineinander, so dass hierdurch die Antriebswelle 8 über den Treibriemen 7 angetrieben werden kann. Der Treibriemen 7 bildet hierbei das Antriebsteil 18. Das Abtriebsteil 19 wird von der Antriebsscheibe 11 ausgeformt.

Die borstenartigen Fortsätze 17 des Treibriemens 7 und der Antriebsscheibe 11 können auch senkrecht zur Riemenoberfläche bzw. radial von der Antriebsscheibe 11 abragen.

Bei dem in Fig. 6 dargestellten Bodenpflegegerät 20 handelt es sich um ein Polier- oder sogenanntes Bohnergerät, welches drei gemeinsam angetriebene Trägerscheiben 21 besitzt. Letztere erstrecken sich gehäuseeinwärts eingesenkt hinter einer in dem Gehäuse einsetzbaren Bodenplatte, welche konturentsprechend ausgeschnittene Öffnungen aufweist.

Den einzelnen Trägerscheiben 21 ist je ein Pflegeeinsatz in Form einer Bohnerscheibe im Wege einer Klipsverbindung zugeordnet. Die Bohnerscheiben sind nicht dargestellt.

Der Antrieb der Trägerscheiben 21 erfolgt über ein motorberiebenes, ritzelartiges Antriebsteil 18, welches mit Ringlaufflächen 22 zweier benachbarter Trägerscheiben 21 zusammenwirkt. Die Anordnung der Trägerscheiben 21 innerhalb des Gehäuses des Bodenpflegegerätes 20 ist so getroffen, dass eine Trägerscheibe 21 sich mit ihrer Ringlauffläche 22 an den Ringlaufflächen 22 der beiden anderen Trägerscheiben abstützt, wobei diese beiden anderen Trägerscheiben 21 mit ihren Ringlaufflächen 22 das Antriebsteil 18 radial beaufschlagen. Das elektrisch angetriebene Antriebsteil 18 bewirkt somit ein gleichmäßiges Drehen aller drei Trägerscheiben 21.

Wie auch schon bei den zuvor beschriebenen Ausführungsbeispielen ist auch hier die Kupplung K durch auf dem Antriebsteil 18 und dem Abtriebsteil 19 aufgebrachte borstenartige Fortsätze 17 realisiert. So weist das ritzelartige Antriebsteil 18 umfangsseitig bspw. im Beflockungsverfahren aufgebrachte, bevorzugt als Fasern ausgebildete borstenartige Fortsätze 17 auf, welche mit auf der Ringlauffläche 22 der Trägerscheibe 21 aufgebrachten borstenartigen Fortsätzen 17 kämmen. Auch diese Kupplungsanordnung kann laufrichtungsgebunden sein, dies bei geneigter Anordnung der Fortsätze in Antriebsrichtung des Antriebsteils 18. Es ist jedoch auch eine streng radial ausgerichtete Anordnung der Fortsätze 17 denkbar.

Wie aus der Schnittdarstellung in Fig. 8 zu erkennen, lässt sich die erfindungsgemäße Kupplung K auch zwischen zwei Trägerscheiben 21 ausbilden, wobei eine Trägerscheibe 21 das Antriebsteil und die andere Trägerscheibe 21 das Abtriebsteil bildet.

Unabhängig von der gewählten Kupplungsanordnung und dem Einsatzbereich für die erfindungsgemäße Kupplung können das Antriebsteil 18 und/oder das Abtriebsteil 19 als Kunststoffteil vorliegen. Denkbar ist jedoch auch eine Ausgestaltung, bei welcher eines der beiden Teile oder auch beide Teile metallisch ausgebildet sind und die Fortsätze einteilig angeformt sind. Diese metallischen Fortsätze sind hinsichtlich ihrer Dimensionierung an die bspw. im Beflokkungsverfahren aufgebrachten, faserartigen Fortsätze angepasst ausgebildet.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. In einer Teppichkehrmaschine (1) angeordnete Bürstenwalze (14), die als Abtriebsteil (19) über ein Antriebsteil (18), bevorzugt über eine Antriebswelle (8) angetrieben ist, **dadurch gekennzeichnet, dass** die Antriebswelle (8) sich bezüglich einer Drehachse der Antriebswelle (8) radial und/oder axial erstreckende, borstenartige Fortsätze (17) aufweist, die mit auf einer zugeordneten Fläche der Bürstenwalze (14) angeordneten borstenartigen Fortsätzen (17) in Kupplungseingriff sind.

2. Bürstenwalze nach Anspruch 1 oder insbesondere danach, **dadurch gekennzeichnet, dass** sich der Borsteneingriff über ein Drittel oder mehr einer axialen Länge einer Bürstenwalze (14) erstreckt.

3. Bürstenwalze nach einem oder mehreren der vorhergehenden Ansprüche oder insbesondere danach, **dadurch gekennzeichnet, dass** die Fortsätze (17) auf dem Antriebsteil (18) in und/ oder auf dem Abtriebsteil (19) entgegen Antriebsrichtung (r) bzw. Umfangsrichtung geneigt ausgerichtet sind.

4. Bürstenwalze nach einem oder mehreren der vorhergehenden Ansprüche oder insbesondere danach, **dadurch gekennzeichnet, dass** die borstenartigen Fortsätze (17) als textile Fasern ausgebildet sind.

5. Bürstenwalze nach einem oder mehreren der vorhergehenden Ansprüche oder insbesondere danach, **dadurch gekennzeichnet, dass** die borstenartigen Fortsätze (17) Kunststofffasern sind.

6. Bürstenwalze nach einem oder mehreren der vorhergehenden Ansprüche oder insbesondere danach, **dadurch gekennzeichnet, dass** die borstenartigen Fortsätze (17) im Beflockungsverfahren aufgebracht sind.

7. Bürstenwalze nach einem oder mehreren der vorhergehenden Ansprüche oder insbesondere danach, **dadurch gekennzeichnet, dass** die mit borstenartigen Fortsätzen (17) versehenen, zugeordneten Flächen angepasst konisch verlaufen.

8. Kupplung (K) eines Antriebsteils (18) mit einem Abtriebsteil (19), wobei Teile des Antriebsteils (18) in Teile des Abtriebsteils (19) eingreifen, **dadurch gekennzeichnet, dass** die Teile an dem Antriebsteil (18) und/oder an dem Abtriebsteil (19) als borstenartige Fortsätze (17) ausgebildet sind.

9. Kupplung nach Anspruch 8 oder insbesondere danach, **dadurch gekennzeichnet, dass** das Antriebsteil (18) und/oder das Abtriebsteil (19) metallisch ausgebildet ist und einteilig angeformte Fortsätze aufweist, die hinsichtlich ihrer Dimensionierung an bspw. im Beflockungsverfahren befestigte Fortsätze (17) des Abtriebsteils (19) und/oder des Antriebsteils (18) zum drehmomentübertragenden Formschlusseingriff angepasst ausgebildet sind.

10. Kupplung nach einem oder mehreren der Ansprüche 8 bis 9 oder insbesondere danach, **dadurch gekennzeichnet, dass** das Antriebsteil (18) ein Treibriemen (7) ist und das Abtriebsteil (19) ein walzenartiger Körper, der die borstenartigen Fortsätze (17) auf seiner dem Treibriemen (7) zugeordneten Auβenumfangsfläche aufweist.

11. Kupplung nach einem oder mehreren der Ansprüche 8 bis 10 oder insbesondere danach, **dadurch gekennzeichnet, dass** das Antriebsteil (18) ritzelartig ausgebildet und mit einer Seitenfläche eines Scheibenkörpers, bspw. einer Bohnerscheibe, zusammenwirkt.

12. Kupplung nach einem oder mehreren der Ansprüche 8 bis 11 oder insbesondere danach, **dadurch gekennzeichnet, dass** das Antriebsteil (18) und das Abtriebsteil (19) Scheibenkörper sind, die an Umfangsseitenflächen miteinander in Eingriff sind.

13. Kupplung nach einem oder mehreren der Ansprüche 8 bis 12 oder insbesondere danach, **dadurch gekennzeichnet, dass** die Fortsätze (17) auf dem Antriebsteil (18) in und/oder auf dem Abtriebsteil (19) entgegen Antriebsrichtung (r) bzw. Umfangsrichtung geneigt ausgerichtet sind.

14. Kupplung nach einem oder mehreren der Ansprüche 8 bis 13 oder insbesondere danach, **dadurch gekennzeichnet, dass** die borstenartigen Fortsätze (17) als textile Fasern ausgebildet sind.

15. Kupplung nach einem oder mehreren der Ansprüche 8 bis 14 oder insbesondere danach, **dadurch gekennzeichnet, dass** die borstenartigen Fortsätze (17) Kunststofffasern sind.

16. Kupplung nach einem oder mehreren der Ansprüche 8 bis 15 oder insbesondere danach, **dadurch gekennzeichnet, dass** die borstenartigen Fortsätze (17) im Beflockungsverfahren aufgebracht sind.

17. Kupplung nach einem oder mehreren der Ansprüche 8 bis 16 oder insbesondere danach, **dadurch gekennzeichnet, dass** die mit borstenartigen Fortsätzen (17) versehenen, zugeordneten Flächen angepasst konisch verlaufen.
